# EUROPEAN PATENT APPLICATION

(11) **EP 3 919 674 A1**
(43) Date of publication of application: **08.12.2021**
(21) Application number: 20861993.2
(22) Date of filing: 30.03.2020
(51) Int. Cl.: D06N 3/00

(54) **LIGHT-TRANSMITTANCE ARTIFICIAL LEATHER AND MANUFACTURING METHOD THEREFOR, LAMINATING LEATHER, AND AUTOMOTIVE INTERIOR**

(71) Applicant: Canadian General-Tower (Changshu) Co., Ltd, Changshu Jiangsu 215533 (CN)
(72) Inventor: CHENG, Hao, Jiangsu, 215533 (CN); GUO, Qiang, Jiangsu, 215533 (CN); SONG, Weifeng, Jiangsu, 215533 (CN); LIU, Jianhong, Jiangsu, 215533 (CN); SUN, Xiaoling, Cambridge, Ontario, N1R 5T6 (CA); LOMAS, Mark, Cambridge, Ontario, N1R 5T6 (CA)
(74) Representative: Barker Brettell LLP
(86) International application number: PCT/CN2020/082141
(87) International publication number: WO 2021/195866

(57) **Abstract**

The invention is a light-translucent artificial leatherette, a preparation method therefor, and a composite leatherette for automotive interiors. The light-translucent artificial leatherette consists of a surface treating agent layer and a multilayer polymer material construction. The multilayer polymer material construction is comprised of at least an epidermal layer, which is a pigmented layer, and a surface treating agent layer, which is affixed to the epidermal layer. The light-translucent artificial leatherette is further comprised of a light-shielding layer, within which an inverse mask or light-transparent patterned structure is incorporated. The light-shielding layer is positioned between two laminates of the multilayer polymer construction adjacent thereto. In the light-translucent artificial leatherette of the invention, a light-shielding layer is positioned directly between two laminates of the multilayer polymer construction adjacent thereto, and there is an inverse mask pattern embedded into the light-shielding layer. A light source can illuminate the inverse mask structure and thereby display an inverse mask pattern on the light-translucent artificial leatherette surface. Thereby, a surface pattern can be projected as required, on the surface of the light-translucent artificial leatherette through the use of uniform lighting positioned under the artificial leatherette surface, and the pattern can be displayed clearly.

## Description

### Technical Field

The invention relates to the technical field of artificial leatherette, and in particular to light-translucent artificial leatherette, a method for producing light-translucent artificial leatherette, a composite leatherette, and an automotive interior incorporating light-translucent artificial leatherette and composite leatherette.

### Background Art

Artificial leatherette is a plastic product that looks and feels like leather and can replace leather. Characterized by high flexibility and wear resistance, artificial leatherette can be widely used for bag production and automotive interior decoration.

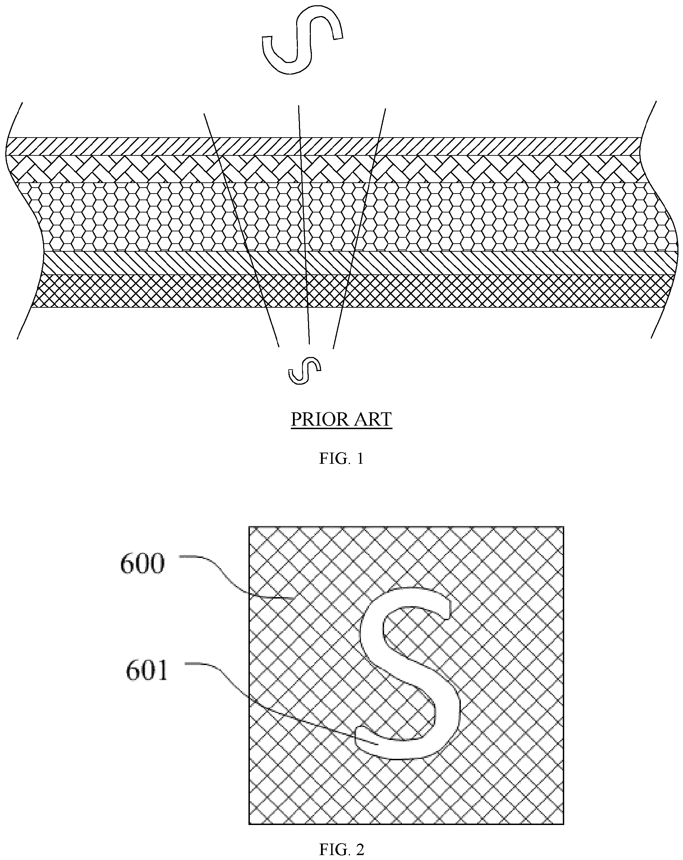

With the development of the automotive interior industry, people have increasingly high requirements for the automotive interior atmosphere and human-vehicle interactions. Owing to its unique material characteristics, the traditional artificial leatherette has a blocking effect on light and therefore cannot let light pass through, with the result that holes have to be punched in the surface for better interior transmittance. Punching holes in the surface of artificial leatherette enables light to fully transmit through the artificial leatherette, but if a certain pattern needs to be presented the shape of the light source below must be changed accordingly. For example, as shown in FIG. 1, an S-shaped light source may present an S-shaped pattern on the surface of the artificial leatherette. To ensure the strength of artificial leatherette, the hole density mustn't be too high (which can further cause the pattern formed to be vague), and this further avoids detriments, such as that a small-sized pattern may fail to display well. In addition, because artificial leatherette has a certain thickness, and in a practical application (for example, when incorporated in an automotive interior), generally a foam that is 1-10mm thick needs to be provided at the bottom of the artificial leatherette to form composite leatherette to improve the sense of touch. When light transmits from the bottom of the composite leatherette to the top of the composite leatherette, light will be scattered to different degrees, and the farther it is scattered, the more obvious the scattering is, which causes the pattern to be extremely vague.

### Summary of the Invention

In light of the problems existing in the prior art, as described herein, the main aim of the invention is to provide a light-translucent artificial leatherette, a method for producing said light-translucent artificial leatherette (the preparation method), a composite leatherette, and an automotive interior incorporating said light-translucent artificial leatherette and/or composite leatherette.

To achieve the above aim, the invention adopts the following technical scheme:
In a first aspect, the invention is a light-translucent artificial leatherette that comprises a surface treating agent layer and a multilayer polymer construction. The multilayer polymer construction comprises at least an epidermal layer, which is a pigmented layer. The surface treating agent layer is affixed to the epidermal layer. The light-translucent artificial leatherette also comprises a light-shielding layer, on which an inverse mask or light-transparent structure is provided. The light-shielding layer is applied between two adjacent laminates of the multilayer polymer construction or on the inner side of the innermost laminate of the multilayer polymer construction.

In a preferred embodiment of the invention, the multilayer polymer construction comprises an epidermal layer and a support layer affixed to the epidermal layer, and a light-shielding layer is applied between the epidermal layer and the support layer.

In another preferred embodiment of the invention, the multilayer polymer construction comprises an epidermal layer and a glue layer affixed to the epidermal layer, a light-shielding layer is applied between the epidermal layer and the glue layer.

In yet another preferred embodiment of the invention, the multilayer polymer construction comprises an epidermal layer, a support layer affixed to the epidermal layer and a glue layer affixed to the support layer, and a light-shielding layer is applied between the support layer and the glue layer.

In a preferred embodiment of the invention, the support layer is of a non-foaming or micro-foaming structure, and the foaming ratio of the micro-foaming structure is less than or equal to 1.5.

In a preferred embodiment of the invention, the light-shielding layer is printed on the surface of one of the two adjacent laminates of the multilayer polymer construction.

In a preferred embodiment of the invention, the printing method is one of a variety of printing methods, such as one of the following: UV printing, gravure printing, heat transfer process and screen printing.

In a preferred embodiment of the invention, the main material of the slurry adopted in the printing process is the same as the main material of the light-translucent artificial leatherette.

In a preferred embodiment of the invention, the light-shielding layer covers up the overall surface of its adjacent polymer material layer.

In a preferred embodiment of the invention, the multilayer polymer construction also comprises a glue layer and a base fabric layer provided on the inner side of the support layer, and a light-shielding layer is applied between the epidermal layer and the support layer, or between the support layer and the glue layer, or between the glue layer and the base fabric layer, or on the inner side of the base fabric layer.

In a second aspect, the invention is a method of producing (preparation method) a light-translucent artificial leatherette. The preparation method comprises the step of formatting a multilayer polymer construction and the step of forming a surface treating agent layer. The preparation method also comprises the step of forming a light-shielding layer, whereby the light-shielding layer is formed between two adjacent laminates of the multilayer polymer construction, and an inverse mask or light-translucent structure is produced on the light-shielding layer.

In a preferred embodiment of the invention, the formation of the light-shielding layer comprises the step of: printing the prepared light-shielding layer on the surface of one of the two adjacent laminates of the multilayer polymer construction.

In a preferred embodiment of the invention, the main material of the light-shielding layer slurry is the same as the main material of the light-translucent artificial leatherette.

In a preferred embodiment of the invention, the preparation method comprises the steps of:
S20: Applying an epidermal layer slurry on release paper to form an epidermal layer;
S30: Printing the light-shielding layer on the surface of the epidermal layer to form a light-shielding layer; and
S40: Applying a support layer slurry on the surface of the light-shielding layer to form a support layer.

In a preferred embodiment of the present invention, the preparation method comprises the steps of:
S300: Forming a support layer by calendering;
S400: Forming a light-shielding layer on the surface of the support layer by printing; and
S500: Forming an epidermal layer on the surface of the light-shielding layer by calendering.

In a preferred embodiment of the invention, the support layer is not processed by a foaming technology or is processed by micro-foaming technology, and the micro-foaming ratio is less than or equal to 1.5.

In a third aspect, the invention is a composite leatherette that comprises lamination layers affixed to each other and the light-translucent artificial leatherette of an embodiment of the invention .

In a preferred embodiment of the invention, the lamination layers are formed of a three-dimensional spacer fabric or polyurethane foam, wherein the three-dimensional spacer fabric has a transmittance of not lower than 70%; and the polyurethane foam has a transmittance of 8% to 15%.

In a fourth aspect, the invention is an automotive interior that comprises the aforesaid light-translucent artificial leatherette or the aforesaid composite leatherette.

In a preferred embodiment of the invention, the automotive interior further comprises a light source, which is covered or screened by the light-translucent artificial leatherette or the composite leatherette so that some of the light emitted by the light source can transmit through the inverse mask or light-transparent structure of the light-translucent artificial leatherette.

In the light-translucent artificial leatherette of an embodiment of the invention, a light-shielding layer is provided directly between two adjacent laminates of the multilayer polymer construction, and there is an inverse mask or light-translucent structure provided on the light-shielding layer. A light source can be provided at the inverse mask or light-translucent structure to present an inverse mask pattern on the light-translucent artificial leatherette whereby a pattern can be displayed at will without requiring a light source that has a particular shape. In another embodiment of the invention, after the light-shielding layer is placed in the light-translucent artificial leatherette, the light-shielding layer will be very close to the surface of the light-translucent artificial leatherette, such that limited light scattering is caused, which causes the patterns to be clearly displayed. The clarity of the display of the patterns will not be affected if the light-translucent artificial leatherette is affixed to a lamination layer, such as a three-dimensional spacer fabric or polyurethane foam, to form a composite structure. In some embodiment of the present invention, the light-shielding layer can be prevented from making contact with other structures, and thereby the light-shielding layer may be well protected. When compared with an embodiment of the invention wherein the light-shielding layer is adhered to the outer side of the light-translucent artificial leatherette, this configuration, whereby the light-shielding lawyer is between two adjacent laminates, may effectively protect the light-shielding layer from falling off and from being damaged by other structures which are bonded thereto.

### Description of the Drawings

The preferred embodiments of the invention will be described herein by reference to the drawings. In the drawings:
FIG. 1 shows a prior art light transmission scheme;
FIG. 2 shows a structure diagram of a light-shielding layer comprising a lawyer of a light-translucent artificial leatherette, in accordance with an embodiment of the invention;
FIG. 3 shows a light transmission scheme of a light-translucent artificial leatherette, in accordance with an embodiment of the invention;
FIG. 4 shows the a light transmission scheme of a light-translucent artificial leatherette, in accordance with an embodiment of the invention;
FIG. 5 shows a structure diagram of a light-translucent artificial leatherette, in accordance with an embodiment of the invention;
FIG. 6 shows a structure diagram of a light-translucent artificial leatherette, in accordance with an embodiment of the invention;
FIG. 7 shows a flow chart of a method of producing a light-translucent artificial leatherette, in accordance with an embodiment of the invention;
FIG. 8 shows a flow chart of a method of producing a light-translucent artificial leatherette, in accordance with an embodiment of the invention;
FIG. 9 shows a flow chart of a method of producing a light-translucent artificial leatherette, in accordance with an embodiment of the invention;
FIG. 10 shows a flow chart of a method of producing a light-translucent artificial leatherette, in accordance with an embodiment of the invention;

In the drawings the following elements are referenced by the cited reference numbers: the surface treating agent layer 100; the epidermal layer 200; the support layer 300; the glue layer 400; the base fabric 500; the light-shielding layer 600; the inverse mask structure 601; the light source 700.

### Specific Embodiments of the Invention

The invention is described herein as having several embodiments, however there are more embodiments of the invention than are enumerated herein. In the description of the details of the invention herein, some specific details are described in detail. To avoid confusing the essence of the invention, the methods, processes, procedures or components well known in the art are not described in detail herein.

In addition, those of ordinary skill in the art will recognize that all of the drawings provided herein are provided for illustrative purposes only, and that the drawings are not necessarily drawn to scale.

Unless explicitly requested in the context, the terms "contain" and "include", as well as similar words and phrases, herein should be interpreted as inclusive rather than exclusive or exhaustive; in other words, these terms, as well as similar words and phrases, mean "include but not limited to".

In the description of the invention, it should be understood that the terms "first" and "second" are applied for descriptive purposes only and should be interpreted as indicating or implying relative importance. Moreover, in the description of the invention, "a number of', "multiple", and "plurality" mean two or more.

The test method for "transmittance" described in the Application is as follows: ASTM E1348, of ASTM International.

In light of the problems that existing prior art artificial leatherette faces, specifically the requirement for a shaped light source to be utilized for transmittance of any pattern and that pattern transmittance results in a vague pattern, the invention overcomes such problems. The invention is a light-translucent artificial leatherette that comprises a multilayer polymer construction and a surface treating agent layer 100 that covers the outermost polymer material layer. The light-translucent artificial leatherette further comprises a light-shielding layer 600. As shown in FIG. 2, an inverse mask structure 601 is incorporated on the light-shielding layer 600 to form a pattern. Owing to the low thickness of the surface treating agent layer 100, if the light-shielding layer 600 is applied between the surface treating agent layer 100 and the multilayer polymer construction, the color of the light-shielding layer 600 will be exposed, therefore the light-shielding layer 600 is applied between and adjacent to two laminates of the multilayer polymer construction. The light-shielding layer 600 is light-translucent at the inverse mask structure 601 only, such that when a light is on the inverse mask structure 601 will form a pattern which will appear on the surface of the light-translucent artificial leatherette. Such pattern can be displayed even if the light sources is not a light source with a particular shape. In addition, in embodiments of the invention wherein the light-shielding layer 600 is positioned inside the light-translucent artificial leatherette, there is a benefit that the light-shielding layer 600 will be very close to the surface of the light-translucent artificial leatherette, having the result that the light will be virtually unscattered, this causes the pattern to be very clearly displayed. The clearness of the pattern will not be affected even if the light-translucent artificial leatherette is affixed to a buffer layer, such as a three-dimensional spacer fabric or polyurethane foam, to form a composite structure. As another benefit of such an embodiment of the invention is that the light-shielding layer 600 can be prevented from making contact with other structures, with the result that the light-shielding layer 600 may be well protected. This is particular benefit when compared with providing the light-shielding layer the outer side of artificial leatherette, as this positioning of the light-shielding lawyer inside the light-translucent artificial leatherette may effectively protect the light-shielding layer 600 and prevent it from abrading off or being destroyed by other structures bonded thereto.

For example, as shown in FIG. 2, the mesh line area on the light-shielding layer 600 is light-proof, and the white area (S-shaped inverse mask structure) is light-translucent, such that a very clear S-shaped pattern can be displayed on the surface of the light-translucent artificial leatherette.

In embodiments of the invention, the pattern can also be formed even if there is no inverse mask structure 601 on the light-shielding layer 600, such that a light-translucent structure can be incorporated on the light-shielding layer 600 to form a pattern. For example, a translucent material can be provided in the desired pattern area while a light-proof (opaque) material can be provided in other positions.

The multilayer polymer construction comprises at least an epidermal layer 200, and a glue layer 400 and/or a support layer 300. The epidermal layer 200 is a colored layer, and the surface treating agent 100 is affixed to the epidermal layer 200. The composition is such that, when a light is off, the light-translucent artificial leatherette will look normal, but when the light is on, there will be a pattern displayed on the surface of the light-translucent artificial leatherette. The quantity of the content of the pigment in the colourant used to produce the epidermal layer 200 can be lowered such that the pigment will be more dispersed in the colourant, however this may affect the color covering effect, therefore, it in embodiments of the invention it is preferable that the particle size of the pigment in the slurry used to produce the epidermal layer 200 be Nanosized, such as 0.5-10nm, such that the transmittance will not be affected even if the content of pigment is relatively high, and to ensure effective color covering is achieved.

Moreover, as foaming may affect the transmittance of artificial leatherette, preferably, the support layer 300 is produced with a non-foaming or micro-foaming structure, and the foaming ratio of any micro-foaming structure therein is less than or equal to 1.5.

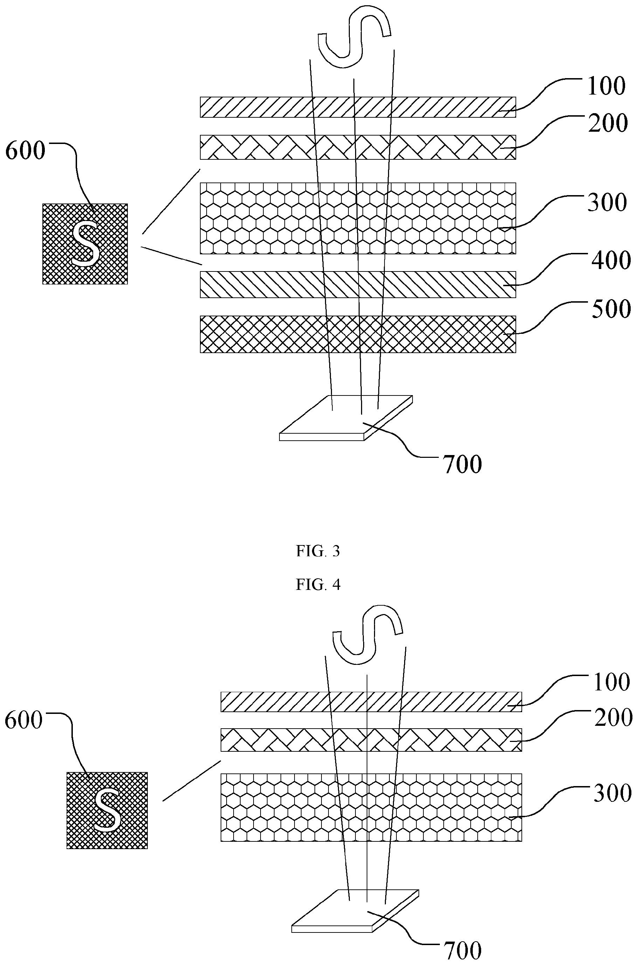

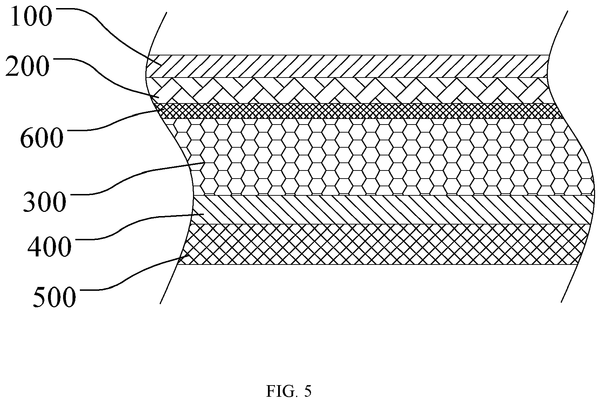

In an embodiment of the invention, as shown in FIG. 3, the multilayer polymer construction consists of an epidermal layer 200, a support layer 300 and a glue layer 400 arranged to be positioned in an ordered manner as laminates. A base fabric 500 is positioned closely on the inner side of the glue layer 400. The base fabric 500 is a high-transmittance knitted fabric or non-woven fabric, a surface treating agent 100 covers the epidermal layer 200, and the light-shielding layer 600 can be positioned between the epidermal layer 200 and the support layer 300 or between the support layer 300 and the glue layer 400. As light scattering will have a smaller effect on imaging and a clearer pattern will be displayed on the surface of the light-translucent artificial leatherette if the light-shielding layer 600 is positioned closer to the surface of the light-translucent artificial leatherette, in a preferred embodiment of the invention, as shown in FIG. 5, the light-shielding layer 600 is positioned between the epidermal layer 200 and the support layer 300.

In another embodiment of the invention, as shown in FIG. 4, the multilayer polymer construction comprises an epidermal layer 200 and a support layer 300, with a light-shielding layer 600 positioned between the epidermal layer 200 and the support layer 300. This embodiment of the invention can form and display a clear pattern.

In yet another embodiment of the invention, the multilayer polymer construction comprises an epidermal layer 200 and a glue layer 400, such that the glue layer 400 is positioned closely on the internal surface of the epidermal layer 200, and a light-shielding layer 600 is positioned and applied between the epidermal layer 200 and the glue layer 400.

The light-shielding layer 600 can be affixed to a corresponding laminate of the multilayer polymer construction after it is produced. To improve the adhesion between the light-shielding layer 600 and the multilayer polymer construction, it is preferable that the light-shielding layer 600 is printed on the surface of one of the two laminates of the multilayer polymer construction that are positioned adjacent to the light-shielding layer. For example, when the light-shielding layer 600 is applied and positioned between the epidermal layer 200 and the support layer 300, the light-shielding layer 600 is printed on the surface of the epidermal layer 200 or the support layer 300. Of course, as the light-shielding layer 600 is positioned between two laminates of the multilayer polymer construction, the light-shielding layer 600 is printed on the surface of one of the two laminates of the multilayer polymer construction. The printing method may be one of a variety of printing methods, such as one of the following: UV printing, gravure printing, heat transfer process and screen printing. As a benefit of embodiments of the invention over the prior art, the printing may be characterized by incorporating a simple process, multi-color gradient and true-color displaying. As an example, UV printing is particularly suitable for the printing of a light-shielding layer provided with a light-transmitting structure. As a further benefit, to improve the fusion between the light-shielding layer 600 and the multilayer polymer construction, the slurry for the light-shielding layer 600 is formed of a major material that is the same as the main material of the light-translucent artificial leatherette. For example, if the light-translucent artificial leatherette is formed to be a PVC (polyvinyl chloride) leatherette, the main material of the light-translucent artificial leatherette is PVC powder, and therefore the main material of the slurry for the light-shielding layer 600 in such an embodiment of the invention should also be PVC powder. Thus, the slurry for the light-shielding layer 600 contains PVC powder and light-shielding powder. In other embodiments of the invention, the main material of the slurry for the light-shielding layer 600 and the main material of the light-translucent artificial leatherette can also be another material or other materials, such as one or more of the following materials: CPE (chlorinated polyethylene), AA, PU (polyurethane), silica gel and carbon black.

The position of the light-shielding layer 600 also needs to be determined in the process of producing the invention. To simplify the processing, the light-shielding layer 600 can cover the overall surface of the laminate of the multilayer polymer construction adjacent to such light-shielding layer, for example in an embodiment of the invention, the light-shielding layer 600 is adhered to the overall surface of the multilayer polymer construction.

The invention is further a preparation method for light-translucent artificial leatherette. The preparation method for light-translucent artificial leatherette comprises steps whereby: the multilayer polymer construction is formed, the surface treating agent layer is formed, and the light-shielding layer is formed. The steps relating to the light-shielding layer further comprise, the light-shielding layer 600 layer being positioned between two laminates of the multilayer polymer construction adjacent thereto, and an inverse mask or light-translucent structure being produced on the light-shielding layer to form a pattern.

The steps relating to the surface treating agent layer further comprise applying a surface treating agent on and to the surface of the epidermal layer.

In an embodiment of the invention, the steps relating to the light-shielding layer 600 can comprise the steps of: preparing a light-shielding layer and then affixing the light-shielding layer to the surface of the corresponding laminate of the multilayer polymer construction. In a preferred embodiment of the invention, to improve the adhesion between the light-shielding layer 600 and the multilayer polymer construction, the light-shielding layer 600 is printed on the surface of the multilayer polymer construction. For example, the printing is produced on the surface of the multilayer polymer construction by one of the following: UV printing, gravure printing, heat transfer process or screen printing. Such printing of the light-shielding layer can comprise the step of: printing the prepared light-shielding layer on the surface of one of two polymer material layers of the multilayer polymer construction. A benefit of such printing in embodiments of the invention is that it may be characterized by a simple process, multi-color gradient and true-color displaying. In embodiments of the invention, UV printing is particularly suitable for the printing of a light-shielding layer produced with a light-transmitting structure.

In another preferred embodiment of the invention, to improve the fusion between the light-shielding layer 600 and the multilayer polymer construction, the slurry for the light-shielding layer 600 is made of a main material that is the same as the main material of the light-translucent artificial leatherette. For example, in an embodiment of the invention wherein the light-translucent artificial leatherette is a PVC artificial leatherette, the main material of the light-translucent artificial leatherette is PVC powder. In such an embodiment of the invention, the main material of the slurry for the light-shielding layer is also PVC powder. Thus, the slurry for the light-shielding layer contains PVC powder and light-shielding powder. In other embodiments of the invention, the main material of the slurry for the light-shielding layer and the main material of the light-translucent artificial leatherette can be one or more other materials, such as one or more of the following materials: CPE, AA, PU, silica gel and carbon black.

The production of the multilayer polymer construction consists of the steps required to produce all of the laminates of the multilayer polymer construction. For example, all the laminates of the multilayer polymer construction can be produced by a release paper coating method or calendering method. In an embodiment of the invention, wherein the multilayer polymer construction consists of an epidermal layer, a support layer and a glue layer arranged in an ordered manner as laminates, the production of the multilayer polymer construction consists of the steps to produce the glue layer, the support layer and the epidermal layer. In an embodiment of the invention, wherein the multilayer polymer construction consists of only an epidermal layer and a support layer, the production of the multilayer polymer construction consists of the steps of producing the epidermal layer and producing the support layer. In an embodiment of the invention, wherein the multilayer polymer construction consists of only an epidermal layer and a glue layer, the production of the multilayer polymer construction consists of the steps of producing the epidermal layer and producing the glue layer, and in such an embodiment, the light-shielding layer is also produced, along with the production of the epidermal layer and the glue layer. Light scattering will have a diminished effect on imaging and a clearer pattern will be displayed on the surface of the light-translucent artificial leatherette in relation to the closer that the light-shielding layer 600 is positioned to the surface of the light-translucent artificial leatherette. In a preferred embodiment of the invention, the light-shielding layer is produced along with the production of the epidermal layer and the support layer.

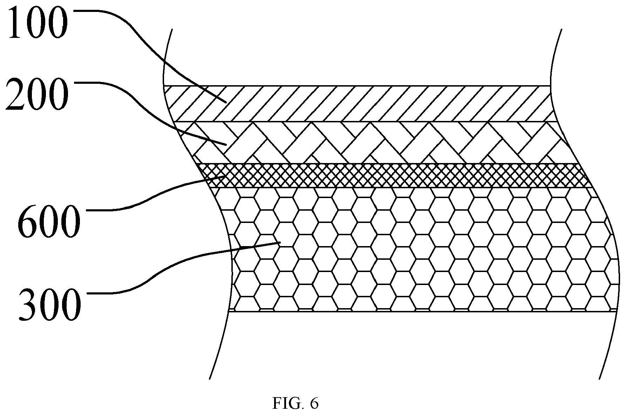

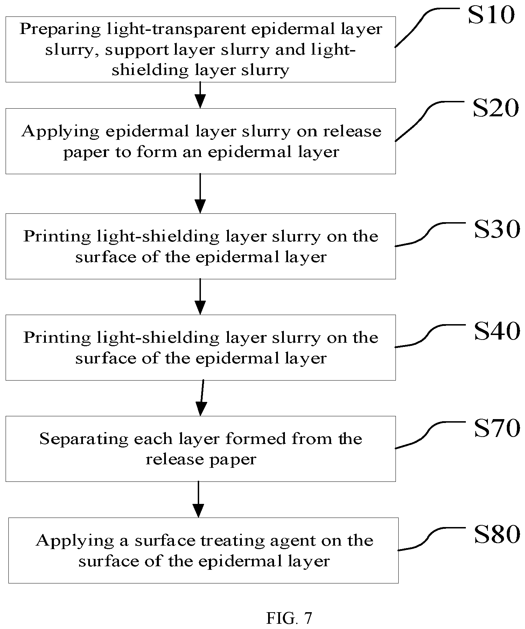

For example, when the multilayer polymer construction consists of an epidermal layer and a support layer only (as shown in FIG. 6), as shown in FIG. 7, a release paper coating method can be performed comprising the following steps:
S10, the step of preparing slurries: preparing light-translucent epidermal layer slurry, support layer slurry and light-shielding layer slurry;
S20, the step of forming an epidermal layer: applying epidermal layer slurry on release paper to form an epidermal layer;
S30, the step of forming a light-shielding layer: printing light-shielding layer slurry on the surface of the epidermal layer;
S40, the step of forming a support layer: applying support layer slurry on the light-shielding layer to form a support layer;
S70: separating each layer formed from the release paper; and
S80, the step of forming a treating agent layer: applying a treating agent on the surface of the epidermal layer and then embossing the surface of the epidermal layer to produce light-translucent artificial leatherette.

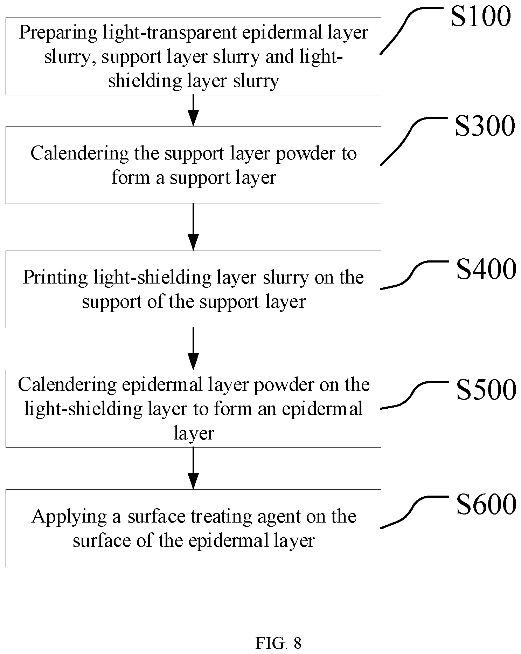

As shown in FIG. 8, the calendering method can, in another embodiment of the invention, be performed comprising the following steps:
S100, the step of preparing slurries: preparing light-translucent epidermal layer slurry, support layer slurry and light-shielding layer slurry;
S300, the step of forming a support layer: calendering the support layer powder to form a support layer;
S400, the step of forming a light-shielding layer: printing light-shielding layer slurry on the support of the support layer;
S500, the step of forming an epidermal layer: calendering epidermal layer powder on the light-shielding layer to form an epidermal layer; and
S600, the step of forming a treating agent layer: applying a surface treating agent on the surface of the epidermal layer and then embossing the surface of the epidermal layer to produce light-translucent artificial leatherette.

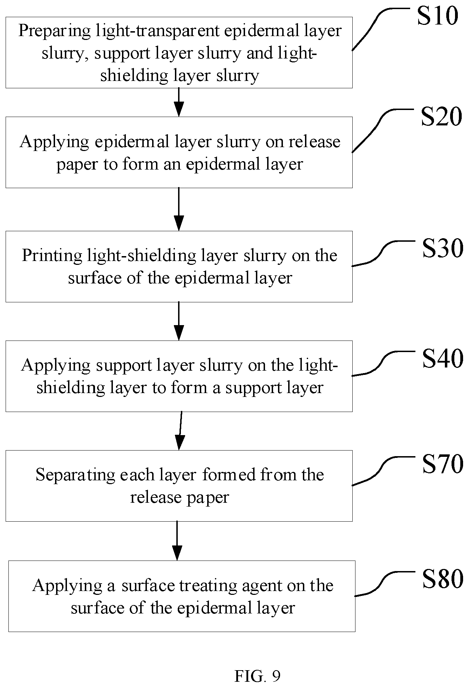

In an embodiment of the invention wherein the multilayer polymer construction consists of an epidermal layer, a support layer and a glue layer (as shown in FIG. 5), as shown in FIG. 9, the release paper coating method can be performed comprising the following steps:
S10, the step of preparing slurries: preparing light-translucent epidermal layer slurry, support layer slurry, glue layer slurry and light-shielding layer slurry;
S20, the step of forming an epidermal layer: applying epidermal layer slurry on release paper to form an epidermal layer;
S30, the step of forming a light-shielding layer: printing light-shielding layer slurry on the surface of the epidermal layer;
S40, the step of forming a support layer: applying support layer slurry on the light-shielding layer to form a support layer;
S50, the step of forming a glue layer: applying glue layer slurry on the support layer to form a glue layer;
S60: affixing a base fabric to the glue layer;
S70: separating each layer formed from the release paper; and
S80, the step of forming a treating agent layer: applying a treating agent on the surface of the epidermal layer and then embossing the surface of the epidermal layer to produce light-translucent artificial leatherette.

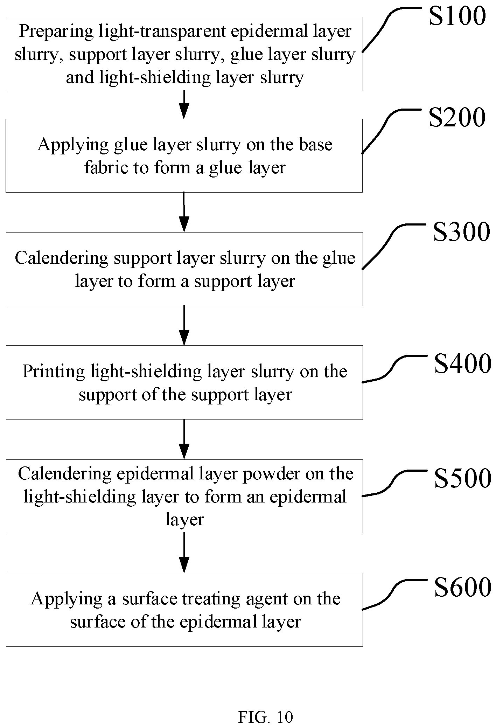

As shown in FIG. 10, the calendering method can, in another embodiment of the invention, be performed comprising the following steps:
S100, the step of preparing slurries: Preparing light-translucent epidermal layer slurry, support layer slurry, glue layer slurry and light-shielding layer slurry;
S200, the step of forming a glue layer: applying glue layer slurry on the base fabric to form a glue layer;
S300, the step of forming a support layer: calendering support layer slurry on the glue layer to form a support layer;
S400, the step of forming a light-shielding layer: printing light-shielding layer slurry on the support of the support layer;
S500, the step of forming an epidermal layer: calendering epidermal layer powder on the light-shielding layer to form an epidermal layer; and
S600, the step of forming a treating agent layer: applying a surface treating agent on the surface of the epidermal layer and then embossing the surface of the epidermal layer to produce light-translucent artificial leatherette.

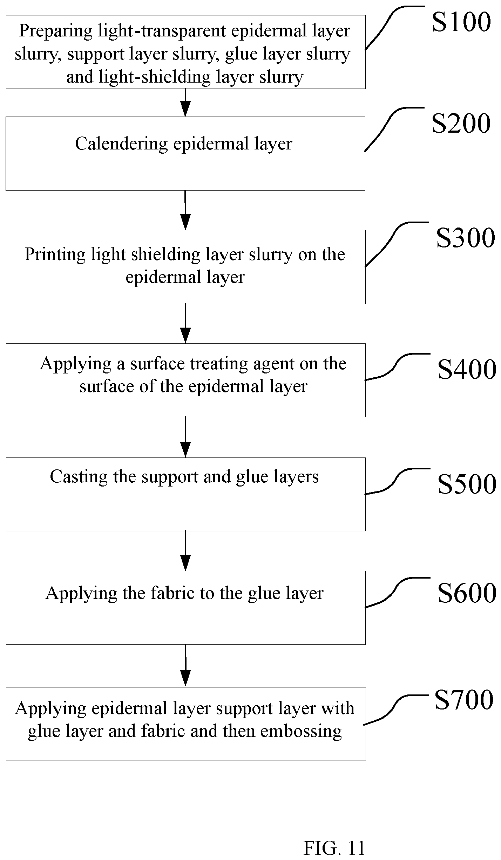

As shown in FIG. 11, the calendering/casting method can, in another embodiment of the invention, be performed comprising the following steps:
S100, the step of preparing slurries:pPreparing light-translucent epidermal layer slurry, support layer slurry, glue layer slurry and light-shielding layer slurry;
S200, the step of forming an epidermal layer: calendering an epidermal layer;
S300, the step of forming a light-shielding layer: printing light-shielding layer slurry on the epidermal layer;
S400, the step of forming a treating agent layer: applying a surface treating agent on the surface of the epidermal layer;
S500, the step of forming a support layer and glue layer: casting the support layer slurry to form a support layer and casting the glue layer slurry on the support layer;
S600, the step of applying the fabric layer: applying the fabric layer to the glue layer; and
S700, the step of forming the composite structure: applying the epidermal layer to the structure formed of the support layer, glue layer and fabric layer, and then embossing the surface of the epidermal layer to produce light-translucent artificial leatherette.

As foaming affects the transmittance of artificial leatherette, in a preferred embodiment of the invention, the support layer is not processed with foaming technology or is processed by micro-foaming technology, and the micro-foaming ratio of such micro-foaming technology is less than or equal to 1.5. In an embodiment of the invention wherein the support layer does not undergo a foaming process, there will be no foaming agent in the raw materials of the support layer; whereas, in an embodiment of the invention wherein the support layer undergoes a foaming process, there will be a small (trace) amount of foaming agent in the raw materials of the support layer such that the foaming ratio may be less than or equal to 1.5.

An embodiment of the invention is a composite leatherette. As shown in the drawings, the composite leatherette comprises buffer layers affixed to each other and the light-translucent artificial leatherette in the manner described herein. In a composite leatherette, the buffer layers may be formed of a three-dimensional spacer fabric with a light transmittance of not less than 70%. In an embodiment of the invention wherein the light-translucent artificial leatherette consists of an epidermal layer, a support layer, a glue layer and a base fabric, the transmittance of the composite leatherette so produced may reach up to 8%-15%, dependent on the evaluation method. In an embodiment of the invention wherein the light-translucent artificial leatherette consists of an epidermal layer, a support layer and a glue layer, with a three-dimensional spacer fabric affixed to the glue layer, the transmittance of the composite leatherette so produced may reach up to 9%-17%. In an embodiment of the invention wherein the light-translucent artificial leatherette consists of an epidermal layer and a support layer, and the support layer is connected to a three-dimensional spacer fabric by translucent glue, the transmittance of the composite leatherette so produced may reach up to 10%-18%. In embodiments of the invention, the buffer layers may also be formed of a polyurethane foam with a light transmittance of approximately 8%-15%. In the prior art, the polyurethane foam is connected to the artificial leatherette by flame or glue lamination technology, however this connection mode affects the overall transmittance of composite leatherette, therefore, in the embodiments of the invention, the polyurethane foam is connected to the light-translucent artificial leatherette by bonding technology. As such, in embodiments of the invention wherein the light-translucent artificial leatherette consists of an epidermal layer, a support layer, a glue layer and a base fabric, the transmittance of the composite leatherette so produced may reach up to 5%-11%; in embodiments of the invention wherein the light-translucent artificial leatherette consists of an epidermal layer, a support layer and a glue layer, with a polyurethane foam affixed to the glue layer, the transmittance of the composite leatherette so produced may reach up to 6%-12%; in embodiments of the invention wherein the light-translucent artificial leatherette consists of an epidermal layer and a support layer, and the support layer is connected to a three-dimensional spacer fabric by translucent glue, the transmittance of the composite leatherette so produced may reach up to 7%-13%. The composite leatherette of the invention can be used in automotive interiors and for other purposes.

In embodiments of the present invention, The three-dimensional spacer fabric consists of two fabric layers which are parallel to each other and spaced apart and a support layer which connects the two fabric layers together. The support layer is formed of connecting threads. To improve the transmittance of the three-dimensional spacer fabric, the meshes on one of the two fabric layers are set to align with the meshes on the other fabric layer, or the size of any misalignment such meshes does not exceed 30% of the maximum span size of the meshes. The meshes on both fabric layers are set to align with each other, or virtually align with each other so as to minimize misalignment, in order that more light can pass through the three-dimensional spacer fabric. The connecting threads between the two fabric layers are arranged in the shape of an "I" so as to maximally bring down the connecting yarns when the connecting yarns are seen in a direction perpendicular to the fabric layers, so that more light can be transmitted. To prevent the I-shaped arrangement of the connecting threads from affecting the support performance of the three-dimensional spacer fabric, the support layer thickness and the connecting yarns are restricted concurrently to ensure the mechanical properties of the three-dimensional spacer fabric. In a preferred embodiment of the invention, the ratio of the support layer thickness to the diameter of the connecting yarns is set to 6-55, or even more preferably to 18-20.

To improve the transmittance of the light-translucent fabric, in the prior art, the mesh density needs to be minimized so that more light can transmit through the light-translucent fabric, because excessively high mesh density blocks light severely. However, the applicant has found that extremely low mesh density seriously affects the support capacity and elasticity of the light-translucent fabric. Therefore, the applicant has found that in order to ensure the support capacity and elasticity of the three-dimensional spacer fabric, the thickness of the fabric yarns 400 must be increased or the overall thickness of the sides of the meshes must be increased. A result may be that the meshes will easily show their contour on the surface of the artificial leatherette in light, looking unsightly. The applicant also found that when transmittance is improved, the elasticity and support capacity must be ensured in order to keep the automotive interior comfortable. In embodiments of the invention, the fabric yarns in the fabric layers and the connecting yarns are all formed of translucent or semi-translucent monofilaments, the ratio of the maximum span size of the meshes to the diameter of the fabric yarns is 8 to 32, and the mesh size is greater than 10 meshes. In such embodiments of the invention, high transmittance can be achieved while the support strength and mechanical properties of the three-dimensional spacer fabric are ensured.

The light-translucent artificial leatherette and composite leatherette disclosed herein can be incorporated in the interior of an automobile or vehicle (an automotive interior). The light-translucent artificial leatherette can be incorporated in center consoles and buttons, etc., while the composite leatherette can be incorporated in seats and handles.

An automotive interior can further incorporate a light source, which is covered by or adjacent to the light-translucent artificial leatherette or the composite leatherette. For example, when the light-translucent artificial leatherette covers a vehicle frame and the light source is positioned adjacent to the inner side of the frame and when turned on the light is directed onto the light-translucent artificial leatherette or composite leatherette, some of the light emitted by the light source can transmit through the inverse mask or light-translucent structure incorporated in light-translucent artificial leatherette or composite leatherette. In such an embodiment of the invention, when the light is on, the shape of the inverse mask structure can be displayed on the surface of the light-translucent artificial leatherette, and thereby displaying a clear pattern. The invention comprises a structure that does not require a specially shaped light source (as is required for the prior art), as a result an arbitrarily structured (not specially shaped) light source can be adopted, such as a panel light source, which is easy to install and offers cost-saving benefits over the prior art.

Those skilled in the art will recognize that under the premise of no contradiction, the embodiments of the invention disclosed herein can be freely combined together or superimposed over one another.

It should be understood that the embodiments of the invention disclosed herein are exemplary embodiments only, and are not restrictive embodiments at all. Any obvious or equivalent modification or replacement of the details of the inventions disclosed herein made by those skilled in the art without deviating from the basic principles of the invention will be included in the scope of the invention and the claims therefor.

## Claims

1. A light-translucent artificial leatherette that consists of:
a surface treating agent layer;
a multilayer polymer construction comprising at least an epidermal layer, being a pigmented layer, and said surface treating agent being affixed to the epidermal layer; and
a light-shielding layer, incorporating an inverse mask or light-transparent structure, said light-shielding layer being positioned between two laminates of the multilayer polymer construction adjacent thereto.

2. The light-translucent artificial leatherette according to claim 1, **characterized in that** the multilayer polymer construction further comprises a support layer affixed to the epidermal layer, and the light-shielding layer is positioned between the epidermal layer and the support layer.

3. The light-translucent artificial leatherette according to claim 1, **characterized in that** the multilayer polymer construction further comprises a glue layer affixed to the epidermal layer, and the light-shielding layer is positioned between the epidermal layer and the glue layer.

4. The light-translucent artificial leatherette according to claim 1, **characterized in that** the multilayer polymer construction further comprises a fabric lawyer, a support layer affixed to the epidermal layer, and a glue layer affixed to the fabric layer, and the light-shielding layer is positioned between the support layer and the glue layer.

5. The light-translucent artificial leatherette according to claims 2 or 4, **characterized in that** the support layer a non-foaming or micro-foaming structure, and the micro-foaming structure has ratio of foaming that is less than or equal to 1.5.

6. The light-translucent artificial leatherette according to any of claims 1-5, **characterized in that** the light-shielding layer is printed on a surface of one of the two laminates of the multilayer polymer construction adjacent thereto.

7. The light-translucent artificial leatherette according to claim 6, **characterized in that** the printing method is one of the following: UV printing, gravure printing, heat transfer process and screen printing.

8. The light-translucent artificial leatherette according to any of claims 6 or 7, **characterized in that** a slurry adopted in the printing process primarily comprises a material that is identical to that material of which the light-translucent artificial leatherette is primarily comprised.

9. The light-translucent artificial leatherette according to claim 1, **characterized in that** the light-shielding layer covers the overall surface of a polymer material layer of the multilayer polymer construction adjacent thereto.

10. A method of producing a light-translucent artificial leatherette (preparation method), comprising the steps of:
forming a multilayer polymer construction;
forming a surface treating agent layer;
forming a light-shielding layer;
positioning the light-shielding layer between two laminates of the multilayer polymer construction adjacent thereto; and
incorporating an inverse mask or a light-translucent structure on the light-shielding layer.

11. The method according to claim 10, **characterized in that** forming the light-shielding layer further comprises the step of: printing the light-shielding layer on the surface of one of the two laminates of the multilayer polymer construction.

12. The method according to claim 11, **characterized in that** the printing further comprises the step of: utilizing a slurry in the printing that primarily comprises a material that is identical to that material of which the light-translucent artificial leatherette is primarily comprised.

13. The method according to claim 10, **characterized in that** it further comprises the steps of:
S20: applying an epidermal layer slurry on release paper to produce an epidermal layer;
S30: printing the light-shielding layer on a surface of the epidermal layer; and
S40: applying a support layer slurry on a surface of the light-shielding layer to produce a support layer.

14. The method according to claim 10, **characterized in that** it further comprises the steps of:
S300: forming a support layer by calendering;
S400: forming a light-shielding layer on a surface of a support layer by printing said light-shielding layer thereupon;
S500: forming an epidermal layer on a surface of the light-shielding layer by calendering.

15. The method according to claims 13 or 14, **characterized in that** the support layer is processed by a non-foaming process, or is processed by a micro-foaming technology whereby the micro-foaming technology has a foaming ratio of less than or equal to 1.5.

16. A composite leatherette **characterized in that** it comprises lamination layers affixed to each other and the light-translucent artificial leatherette of any of claims 1-9.

17. The composite leatherette according to claim 16, **characterized in that** the lamination layers are formed of a three-dimensional spacer fabric or polyurethane foam,
wherein the three-dimensional spacer fabric has a transmittance of not lower than 70%; and
the polyurethane foam has a transmittance of 8% to 15%.

18. An automotive interior incorporating the light-translucent artificial leatherette of any of claims 1-9 or the composite leatherette of claims 16 or 17.

19. The automotive interior according to claim 18, **characterized in that** it further comprises a light source which is covered by the light-translucent artificial leatherette or the composite leatherette whereby some light emitted by the light source is transmitted through an inverse mask or light-transparent structure incorporated in the light-translucent artificial leatherette or the composite leatherette.
